# EUROPEAN PATENT APPLICATION

(11) **EP 4 783 142 A1**
(43) Date of publication of application: **29.07.2026**
(21) Application number: 26150726.3
(22) Date of filing: 08.01.2026
(51) Int. Cl.: G08B 25/14, G08B 29/18

(54) **DESIGNING A FIRE ALARM SYSTEM**

(30) Priority: 21.01.2025 US 202519032702
(71) Applicant: Honeywell International Inc., Charlotte, NC 28202 (US)
(72) Inventor: DUGE, Sudeep Jayakumar, Charlotte, 28202 (US); NAIR, Manoj Thankappan, Charlotte, 28202 (US); RAJ, Nishant, Charlotte, 28202 (US); TRIPATHI, Sameer, Charlotte, 28202 (US)
(74) Representative: Haseltine Lake Kempner LLP

(57) **Abstract**

Devices (102, 106, 302, 306), methods (210), and systems (100) for designing a fire alarm system are described herein. An example device (106, 306) is configured to receive information about a facility (212), determine a type of the facility based on the received information, determine a type of control panel (218) to include in a fire alarm system of the facility based on the determined type of the facility, retrieve information about fire alarm systems of additional facilities (216) that are a same type of facility as the determined type of the facility, determine, based on the received information about the facility and the retrieved information about the fire alarm systems of the additional facilities, information about fire sensing devices (220) to include in the fire alarm system of the facility, and provide, to a user, the determined type of control panel and the determined information about the fire sensing devices to include in the fire alarm system of the facility.

## Description

### Technical Field

The present disclosure relates generally to devices, methods, and systems for designing a fire alarm system.

### Background

Large facilities (e.g., buildings), such as commercial facilities, office buildings, hospitals, schools, and the like, may have a fire alarm system that can be triggered during an emergency event (e.g., a fire) to provide guidance to occupants of the facility, such as, for instance, a warning for the occupants to evacuate. For example, a fire alarm system may include a fire control panel and a plurality of fire sensing devices (e.g., sounders and/or smoke detectors), located throughout the facility (e.g., on different floors and/or in different rooms of the facility) that can sense a fire occurring in the facility and provide an audio and/or visual notification of the fire to the occupants of the facility via alarms.

### Brief Description of the Drawings

Figure 1 illustrates an example of a system for designing a fire alarm system in accordance with an embodiment of the present disclosure.
Figure 2 is a block diagram illustrating a method for designing a fire alarm system in accordance with an embodiment of the present disclosure.
Figure 3A illustrates a block diagram of a user device for designing a fire alarm system in accordance with an embodiment of the present disclosure.
Figure 3B illustrates a block diagram of a computing device for designing a fire alarm system in accordance with an embodiment of the present disclosure.

### Detailed Description

Devices, methods, and systems for designing a fire alarm system are described herein. An example device is configured to receive information about a facility, determine a type of the facility based on the received information, determine a type of control panel to include in a fire alarm system of the facility based on the determined type of the facility, retrieve information about fire alarm systems of additional facilities that are a same type of facility as the determined type of the facility, determine, based on the received information about the facility and the retrieved information about the fire alarm systems of the additional facilities, information about fire sensing devices to include in the fire alarm system of the facility, and provide, to a user, the determined type of control panel and the determined information about the fire sensing devices to include in the fire alarm system of the facility.

The traditional process of designing a fire alarm system (e.g., determining the proper fire sensing devices to include in the fire alarm system and/or their placements within the fire alarm system) is a manual process that is time consuming and prone to errors. For example, the commissioning engineer and/or site installer of the fire alarm system may be dependent on technical support personnel, who may not understand fire safety terminology and guidelines, for design decisions, which may hinder effective implementation of safety measures. Further, traditional fire alarm system design processes may rely on generalized guidelines that do not take into account the specific characteristics and risks of the facility in which the fire alarm system is being installed, such as, for instances, the different characteristics and risks of different zones within the facility. Additionally, users (e.g., the commissioning engineer and/or site installer) may lack comprehensive knowledge of fire safety installation standards and/or regional standards specific to the location of the facility, which can negatively impact their ability to make informed design decisions. Such an ineffective fire alarm system design process can lead to inadequate preparedness for fires and/or other emergencies, as well as an increased amount of false alarms that may be raised by the fire alarm system, which in turn can increase the risk to the safety of the occupants of the facility and/or to the property of the facility.

Embodiments of the present disclosure, in contrast, can utilize machine learning and artificial intelligence (e.g., an artificial intelligence model) to design a fire alarm system for a facility. For example, a user can provide prompts to the model indicating, for instance, the region of the facility and/or specific information (e.g., specifications) about buildings and/or sites of the facility. Upon receiving the prompts, the artificial intelligence (AI) model can use a database that includes guidelines for specific regions, guidelines for specific facility types, and/or pre-set configurations for similar types of existing facilities to design a fire alarm system for a facility. Such a fire alarm system designed using machine learning and AI in accordance with the present disclosure can be better prepared for, and better handle, fires and other emergencies than fire alarm systems designed using previous (e.g., manual) approaches. Further, a fire alarm system designed using machine learning and AI in accordance with the present disclosure may have a reduced amount of false alarms as compared with fire alarm systems designed using previous (e.g., manual) approaches. Accordingly, designing a fire system for a facility in accordance with embodiments of the present disclosure (e.g., using machine learning and AI) can reduce the risks of a potential fire or other emergency to the safety of the occupants of the facility and to the property of the facility.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

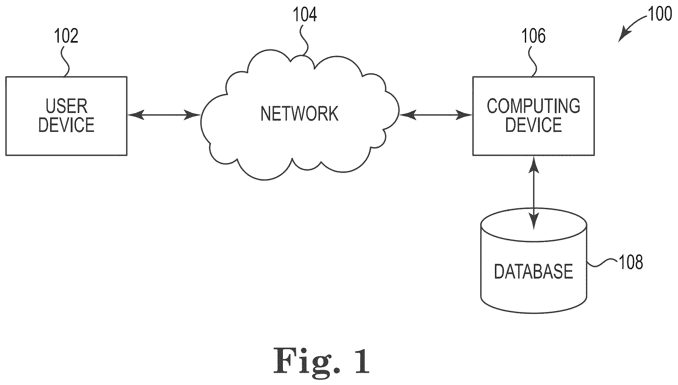

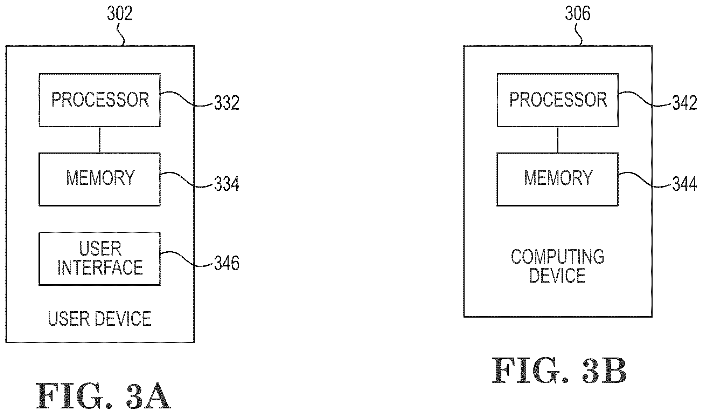

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 302 in Figure 3A.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 illustrates an example of a system 100 for designing a fire alarm system in accordance with an embodiment of the present disclosure. For example, system 100 can be used to design a fire alarm system of a facility (e.g., building or buildings). The facility can be, for instance, a large facility having a large number of floors and/or a number of different buildings, such as a commercial facility, office building, hospital, school, and the like. However, embodiments of the present disclosure are not limited to a particular type of facility.

As shown in Figure 1, system 100 can include a user device 102. User device 102 can be, for example, a tablet, smartphone, laptop, desktop, or other type of computing device of a user involved in the designing of the fire alarm system, such as, for instance, a commissioning engineer or site installer. An example of user device 102 will be further described herein (e.g., in connection with Figure 3A).

User device 102 can provide (e.g., display) prompts to the user to provide (e.g., in which the user can enter) information (e.g., details) about the facility that can be used to design the fire alarm system for the facility. As an example, the prompts can be queries (e.g., questions) that ask the user to provide various information about the facility that may affect the design of the fire alarm system, and the user can provide the requested information in response to the queries. In some examples, additional sub-queries can be provided depending on (e.g., in response to) the information provided in response to a particular query.

The information about the facility can include any information that may affect the selection of the fire sensing devices to include in the fire alarm system and/or their placements within the fire alarm system. For example, the information about the facility can include the type of building(s) (e.g., school, hospital, etc.) of the facility, the location (e.g., the geographic location, such as the country and/or region) of the facility, the number of floors of the facility, the environmental conditions of the facility, the types of spaces (e.g., rooms) in the facility (e.g., labs, conference rooms, classrooms, etc.), and/or standards and regulations applicable to the fire alarm system of the facility (e.g., regional and/or manual standards and regulations for the location of the facility).

As an example, the information can indicate the facility is a school building with four floors in the EU-Denmark region. In such an example, the user can indicate (e.g., select) that the facility is a school building in response to a prompt from user device 102 for the type of the facility, that the facility has four floors in response to a prompt from user device 102 for the number of floors of the facility, and that the facility is in the EU-Denmark region in response to a prompt from user device 102 for the location of the facility. Further, in such an example, user device 102 may provide a sub-query asking for the number and type of rooms in the school in response to the user indicating the facility is a school building, and the user can provide this information in response to the sub-query. For instance, continuing in the example, the user can indicate the school has four labs and 18 classrooms.

As shown in Figure 1, system 100 can include a computing device 106. Computing device 106 can be located remotely from the user and/or facility and, in some embodiments, can be part of a centralized management platform. For instance, computing device 106 can be part of a distributed (e.g., cloud) computing environment.

Computing device 106 can communicate with user device 102 via network 104, as illustrated in Figure 1. For example, user device 102 can send the information about the facility received from the user to computing device 106, and computing device 106 can receive the information about the facility from user device 102, via network 104.

Network 104 can be a network relationship through which computing device 106 can communicate with user device 102. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, network 104 can include a number of servers that receive information from, and transmit information to, user device 102 and computing device 106 via a wired or wireless network.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

Computing device 106 can determine the type of the facility based the information about the facility received from user device 102. The type of the facility can be, for example, a site type of the facility, and can be different than the type of building(s) of the facility. For instance, the facility can be a medium site type facility, an enterprise site type facility, a high rise facility, or a stand-alone facility.

Computing device 106 can determine a type (e.g., brand) of control panel (e.g., the brand of fire control panel) to include in the fire alarm system for the facility based on the determined type of the facility (e.g., the type of control panel to use for the fire alarm system can depend on the type of facility). Further, in some embodiments, computing device 106 can provide, via network 104 and user device 102, additional prompts (e.g., additional queries) to the user for additional information about the facility to determine the type of control panel to include in the fire alarm system. For instance, computing device 106 can ask the user to provide fire extinguisher requirements for the facility, fan control module support requirements for the facility, and/or network support requirements for the facility, and the user can provide, via user device 102 and network 104, this information to computing device 106, which computing device 106 can use (e.g., along with the determined type of the facility) to determine the type of control panel for the fire alarm system.

The control panel can be, for instance, a physical control panel, such as a control box, to be installed in the facility. Once installed, the control panel can be used (e.g., by a user) to monitor and/or control components (e.g., devices, such as the fire sensing devices further described herein) of the fire alarm system of the facility. For instance, the user can use the control panel to directly control the operation of (e.g., actions performed by) the components. Further, the control panel can receive (e.g., collect) data, such as, for instance, real-time operational data, from the components. For instance, the control panel can receive the data directly from the components. Such data can include, for instance, current operational statuses, operational states, and/or properties of the components. As an additional example, the control panel can receive signals (e.g., alarm signals) from the components indicating that an emergency event (e.g., a fire) is occurring in the facility. The components being monitored and/or controlled by the control panel can include, in addition to devices such as the fire sensing devices further described herein, fans and/or dampers that can perform smoke control operations (e.g., pressurizing, purging, exhausting, etc.) during a fire, and/or sprinklers that can provide water to extinguish a fire, among other components.

As shown in Figure 1, system 100 can include a database 108. Database 108 can be part of the same centralized management platform (e.g., the same distributed computing environment) as computing device 106.

Database 108 can include (e.g., store) information (e.g., data) about existing fire alarm systems of additional (e.g., other) facilities. This information can include, for example, the types of fire sensing devices of the existing fire alarm systems, the text and configuration settings of the fire sensing devices of the existing fire alarm systems, standards and regulations applicable to the existing fire alarm systems, and the types of the additional facilities. The types of fire sensing devices of the existing fire alarm systems can include, for example, smoke detectors, sounders, heat sensors and/or multi-sensors (e.g., for chemical labs), non-smoke sensing devices (e.g., for kitchen areas), or any other type of device that can sense a fire or other emergency occurring in the facility and/or provide an audio and/or visual notification (e.g., alarm) of the fire or other emergency to the occupants of the facility. The text settings of the fire sensing devices of the existing fire alarm systems can include, for example, the language (e.g., translation) settings of the fire sensing devices. The configuration settings of the fire sensing devices of the existing fire alarm systems can include, for example, the tones, sound levels, and/or volumes (e.g., decibel level) of the fire sensing devices, and can depend on the location and/or function of the fire sensing devices. The standards and regulations applicable to the existing fire alarm systems can include, for example, regional and/or manual standards and regulations for the locations of the existing fire alarm systems. The types of the additional facilities can include, for example, the site types of the facilities and/or the types of buildings of the facilities.

Computing device 106 can retrieve (e.g., fetch), from database 108, the information about the existing fire alarm systems of additional facilities that are the same type of facility as the determined type of the facility for which the fire alarm system is being designed. For instance, computing device 106 can retrieve from database 108 the types of fire sensing devices of the existing fire alarm systems, the text and configuration settings of the fire sensing devices of the existing fire alarm systems, and the standards and regulations applicable to the existing fire alarm systems, of the additional facilities that are the same type of facility as the determined type of facility for which the fire alarm system is being designed. For instance, continuing in the previous example, if the facility for which the fire alarm system is being designed is a school, computing device 106 can retrieve all information about the existing fire alarm systems of schools that is stored in database 108.

Computing device 106 can then determine, based on the information about the facility for which the fire alarm system is being designed that was received from user device 102 and the information retrieved from database 108 about the existing fire alarm systems of the additional facilities that are the same type of facility as the facility for which the fire alarm system is being designed, information about the fire sensing devices to include in the fire alarm system being designed for the facility. The information about the fire sensing devices to include in the fire alarm system being designed for the facility can include, for example, the quantity of fire sensing devices to include in the fire alarm system, the type(s) of fire sensing devices (e.g., smoke detectors, sounders, heat sensors, multi-sensors, and/or non-smoke sensing devices) to include in the fire alarm system, the text (e.g. language) and configuration settings (e.g., tones, sound levels, and/or volumes, based on zone type, for example) of the fire sensing devices to include in the fire alarm system, battery requirements (e.g. the type of battery) for the fire sensing devices to include in the fire alarm system, and/or the part numbers of the fire sensing devices to include in the fire alarm system.

Computing device 106 can also determine, based on the information about the facility for which the fire alarm system is being designed that was received from user device 102 and the information retrieved from database 108 about the existing fire alarm systems of the additional facilities that are the same type of facility as the facility for which the fire alarm system is being designed, information about installing the fire sensing devices in the fire alarm system being designed (e.g., in the facility for which the fire alarm system is being designed). The information about installing the fire sensing devices can include, for example, wiring information (e.g. guidelines) for installing the fire sensing devices (e.g. based on the regional information standards and/or site configuration), a maximum quantity of fire sensing devices to include in a (e.g., one) room of the facility, a recommendation to install an isolator device at a boundary of a zone of the facility, end of line recommendations, drawings for installing the fire sensing devices, and/or guidelines for installing the fire sensing devices.

Computing device 106 can also determine (e.g., estimate), based on the information about the facility for which the fire alarm system is being designed that was received from user device 102 and the information retrieved from database 108 about the existing fire alarm systems of the additional facilities that are the same type of facility as the facility for which the fire alarm system is being designed, the cost of the control panel and the fire sensing devices to include in the fire alarm system being designed for the facility. For instance, the cost can be based on site requirements of the facility, the determined type of the facility, and/or other requirements received via the prompts provided by user device 102.

Computing device 106 can provide (e.g., recommend and/or suggest) the determined type of control panel to include in the fire alarm system being designed for the facility, the determined information about the fire sensing devices to include in the fire alarm system being designed for the facility, the determined information about installing the fire sensing devices in the fire alarm system being designed for the facility, and/or the determined cost of the control panel and fire sensing devices, to the user of user device 102. For example, computing device 106 can send, via network 104, the determined control panel type, information about the fire sensing devices, information about installing the fire sensing devices, and/or cost to user device 102, which can provide (e.g., display) the determined control panel type, information about the fire sensing devices, information about installing the fire sensing devices, and/or cost to the user.

In some embodiments, user device 102 can receive a selection of the determined type of control panel to include in the fire alarm system being designed for the facility and the fire sensing devices to include in the fire alarm system being designed for the facility (e.g., the user can decide whether to accept the recommended and/or suggested control panel type and fire sensing devices upon being provided with the determined control panel type, information about the fire sensing devices, information about installing the fire sensing devices, and/or cost). Upon receiving the selection, user device 102 can place an order (e.g., raise an inquiry ticket) for the determined type of control panel and the fire sensing devices.

In some embodiments, computing device 106 can determine, based on the information about the facility for which the fire alarm system is being designed that was received from user device 102 and the information retrieved from database 108 about the existing fire alarm systems of the additional facilities that are the same type of facility as the facility for which the fire alarm system is being designed, testing requirements for the fire alarm system (e.g., for the fire sensing devices to be included in the fire alarm system), and provide the determined testing requirements to the user of user device 102. For example, computing device 106 can send, via network 104, the determined testing requirements to user device 102, which can provide (e.g., display) the determined testing requirements to the user.

In some embodiments, computing device 106 can learn from adjustments made by other users to the existing fire alarm systems of the additional facilities. For example, computing device 106 can determine adjustments made by other users to the existing fire alarm systems (e.g., adjustments to the placement of the fire sensing devices of the existing fire alarm systems) of the additional facilities, the reason(s) for those adjustments, and provide (e.g., recommend and/or suggest) those adjustments to the user of user device 102. As an example, a previous user may have adjusted the placement of a heat sensor in a room of the additional facility because the room faces east and receives a large amount of sunlight. In such an example, computing device 102 can determine this adjustment has been made, and provide this to the user of user device 102 as a possible adjustment to make in the fire alarm system being designed for the facility.

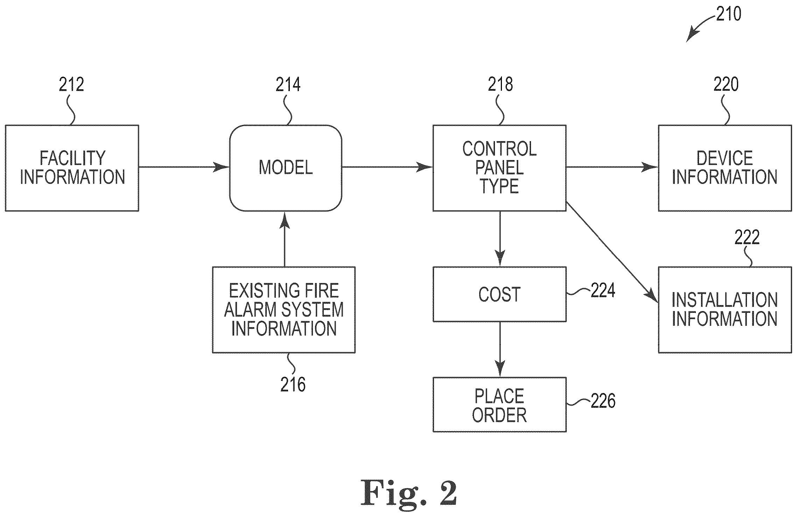

Figure 2 is a block diagram illustrating a method 210 for designing a fire alarm system in accordance with an embodiment of the present disclosure. Method 210 can be performed by system 100 previously described in connection with Figure 1, for example.

At block 212, information about a facility for which the fire alarm system is being designed is input into model 214. This information can include, for example, information about the facility that may affect the design of the fire alarm system (e.g., any information that may affect the selection of the fire sensing devices to include in the fire alarm system and/or their placements within the fire alarm system), and can be received from a user device (e.g., user device 102), as previously described herein (e.g., in connection with Figure 1).

At block 216, information about existing fire alarm systems is input into model 214. This information can include, for example, information about existing fire alarm systems of additional facilities that are the same type of facility as the facility for which the fire alarm system is being designed, and can be retrieved from a database (e.g., database 108), as previously described herein (e.g., in connection with Figure 1).

Model 214 can be, for example, generative AI model, such as, for instance, a large learning model (LLM). Model 214 can be included in computing device 106 previously described in connection with Figure 1. For example, model 214 can be a processing unit (e.g., an LLM processing unit) of computing device 106.

At block 218, model 214 can determine a type of control panel (e.g., fire control panel) to include in the fire alarm system being designed for the facility. Model 214 can determine the type of control panel to include in the fire alarm system based on the type of the facility for which the fire alarm system is being designed, as previously described herein (e.g., in connection with Figure 1).

At block 220, model 214 can determine information about fire sensing devices to include in the fire alarm system being designed for the facility. Model 214 can determine this information based on the information about the facility for which the fire alarm system is being designed that was input at block 212 and the information that was input at block 216 about the existing fire alarm systems of the additional facilities that are the same type of facility as the facility for which the fire alarm system is being designed, as previously described herein (e.g., in connection with Figure 1).

At block 222, model 214 can determine information about installing the fire sensing devices in the fire alarm system being designed for the facility. Model 214 can determine this information based on the information about the facility for which the fire alarm system is being designed that was input at block 212 and the information that was input at block 216 about the existing fire alarm systems of the additional facilities that are the same type of facility as the facility for which the fire alarm system is being designed, as previously described herein (e.g., in connection with Figure 1).

At block 224, model 214 can determine the cost of the control panel and the fire sensing devices to include in the fire alarm system being designed for the facility. Model 214 can determine this cost based on the information about the facility for which the fire alarm system is being designed that was input at block 212 and the information that was input at block 216 about the existing fire alarm systems of the additional facilities that are the same type of facility as the facility for which the fire alarm system is being designed, as previously described herein (e.g., in connection with Figure 1).

At block 226, an order can be placed for the determined type of control panel to include in the fire alarm system being designed for the facility and the fire sensing devices to include in the fire alarm system being designed for the facility. The order can be placed, for instance, via a user device (e.g., user device 102), as previously described herein (e.g., in connection with Figure 1).

Figure 3A illustrates a block diagram of a user device 302 for designing a fire alarm system in accordance with an embodiment of the present disclosure. Figure 3B illustrates a block diagram of a computing device 306 for designing a fire alarm system in accordance with an embodiment of the present disclosure. User device 302 and computing device 306 can be, for example, user device 102 and computing device 106, respectively, previously described in connection with Figure 1.

As shown in Figure 3A, user device 302 can include a memory 334 and a processor 332. As shown in Figure 3B, computing device 306 can include a memory 344 and a processor 342.

The memories 334 and 344 can be any type of storage medium that can be accessed by processors 332 and 342, respectively, to perform various examples of the present disclosure. For example, the memories 334 and 344 can each be a non-transitory computer readable medium having computer readable instructions (e.g., computer program instructions) stored thereon that are executable by the processors 332 and 342, respectively, for designing a fire alarm system in accordance with the present disclosure.

The memories 334 and 344 can be volatile or nonvolatile memory. The memories 334 and 344 can also be removable (e.g., portable) memory, or non-removable (e.g., internal) memory. For example, the memories 334 and 344 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memories 334 and 344 are illustrated as being located within user device 302 and computing device 306, respectively, embodiments of the present disclosure are not so limited. For example, memories 334 and/or 344 can also be located internal to another computing resource (e.g., enabling computer readable instructions to be downloaded over the Internet or another wired or wireless connection).

As shown in Figure 3A, user device 302 can include a user interface 346. A user of user device 302 can interact with user device 302 via user interface 346. For example, the user interface 346 can provide (e.g., display and/or present) information to the user of user device 302, and/or receive information from (e.g., input by) the user of user device 302, as previously described herein. For instance, in some embodiments, user interface 346 can be a graphical user interface (GUI) that can provide and/or receive information to and/or from the user of user device 302, as previously described herein. The display can be, for instance, a touch-screen (e.g., the GUI can include touch-screen capabilities).

The user interface 346 can be localized to any language. For example, the user interface 346 can display information in any language, such as English, Spanish, German, French, Mandarin, Arabic, Japanese, Hindi, etc.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (106, 306) for designing a fire alarm system, comprising:
a memory (344); and
a processor (342) configured to execute instructions stored in the memory (344) to:
receive information about a facility;
determine a type of the facility based on the received information;
determine a type of control panel to include in a fire alarm system of the facility based on the determined type of the facility;
retrieve information about fire alarm systems of additional facilities that are a same type of facility as the determined type of the facility;
determine, based on the received information about the facility and the retrieved information about the fire alarm systems of the additional facilities that are the same type of facility, information about fire sensing devices to include in the fire alarm system of the facility; and
provide, to a user, the determined type of control panel to include in the fire alarm system of the facility and the determined information about the fire sensing devices to include in the fire alarm system of the facility.

2. The computing device of claim 1, wherein the received information about the facility includes:
a building type of the facility;
types of spaces in the facility; and
standards and regulations applicable to the fire alarm system of the facility.

3. The computing device of claim 1, wherein the received information about the facility includes:
a location of the facility; and
environmental conditions of the facility.

4. The computing device of claim 1, wherein the retrieved information about the fire alarm systems of the additional facilities includes types of fire sensing devices of the fire alarm systems of the additional facilities.

5. The computing device of claim 1, wherein the retrieved information about the fire alarm systems of the additional facilities includes text and configuration settings of fire sensing devices of the fire alarm systems of the additional facilities.

6. The computing device of claim 1, wherein the retrieved information about the fire alarm systems of the additional facilities includes standards and regulations applicable to the fire alarm systems of the additional facilities.

7. The computing device of any one of claims 1-6, wherein the processor is configured to execute the instructions to:
determine, based on the received information about the facility and the retrieved information about the fire alarm systems of the additional facilities that are the same type of facility, testing requirements for the fire alarm system of the facility; and
provide, to the user, the determined testing requirements.

8. The computing device of any one of claims 1-6, wherein the processor is configured to execute the instructions to:
determine adjustments made to the fire alarm systems of the additional facilities by other users; and
provide, to the user, the determined adjustments made to the fire alarm systems of the additional facilities.

9. A method for designing a fire alarm system, comprising:
receiving, by a computing device (106, 306), information about a facility;
determining, by the computing device (106, 306), a type of the facility based on the received information;
determining, by the computing device (106, 306), a type of control panel to include in a fire alarm system of the facility based on the determined type of the facility;
retrieving, by the computing device (106, 306), information about fire alarm systems of additional facilities that are a same type of facility as the determined type of the facility;
determining, by the computing device (106, 306) based on the received information about the facility and the retrieved information about the fire alarm systems of the additional facilities that are the same type of facility:
information about fire sensing devices to include in the fire alarm system of the facility; and
information about installing the fire sensing devices in the fire alarm system of the facility; and
providing, to a user, the determined type of control panel to include in the fire alarm system of the facility, the determined information about the fire sensing devices to include in the fire alarm system of the facility, and the determined information about installing the fire sensing devices in the fire alarm system of the facility.

10. The method of claim 9, wherein the method includes:
receiving, from the user, a selection of the determined type of control panel and the fire sensing devices to include in the fire alarm system of the facility; and
placing an order for the determined type of control panel and the fire sensing devices responsive to receiving the selection.

11. The method of claim 9, wherein the method includes:
receiving, by a device (102, 302) of the user, the information about the facility via prompts provided to the user by the device (102, 302) of the user; and
receiving, by the computing device, the information about the facility from the device (102, 302) of the user.

12. The method of claim 9, wherein the method includes retrieving the information about the fire alarm systems of the additional facilities from a database (108).

13. The method of any one of claims 9-12, wherein the information about installing the fire sensing devices in the fire alarm system of the facility includes wiring information for installing the fire sensing devices in the fire alarm system of the facility.

14. The method of any one of claims 9-12, wherein the information about installing the fire sensing devices in the fire alarm system of the facility includes a maximum quantity of fire sensing devices to include in a room of the facility.

15. The method of any one of claims 9-12, wherein the information about installing the fire sensing devices in the fire alarm system of the facility includes a recommendation to install an isolator device at a boundary of a zone of the facility.
